# EUROPÄISCHE PATENTSCHRIFT

(11) **EP 1 051 327 B1**
(45) Veröffentlichungstag und Bekanntmachung des Hinweises auf die Patenterteilung: **04.08.2004**
(21) Anmeldenummer: 99958100.2
(22) Anmeldetag: 20.11.1999
(51) Int. Cl.: B63H 23/30, F16D 25/061

(54) **KUPPLUNG**
CLUTCH
EMBRAYAGE

(30) Priorität: 26.11.1998 DE 19854570
(43) Veröffentlichungstag der Anmeldung: 15.11.2000
(73) Patentinhaber: MAN B & W Diesel A/S, 2450 Copenhagen SV (DK)
(72) Erfinder: HOLMEGAARD THEMSEN, Jesper, Thomas, DK-9000 Aalborg (DK)
(74) Vertreter: Munk, Ludwig, Dipl.-Ing.
(86) Internationale Anmeldenummer: PCT/EP1999/008967
(87) Internationale Veröffentlichungsnummer: WO 2000/030933

(56) Entgegenhaltungen:
- DE-A- 19 623 914
- GB-A- 1 335 907

## Beschreibung

Die Erfindung betrifft eine Kupplung zum Kuppeln von zwei Wellenabschnitten einer Antriebswelle, insbesondere der alternativ mittels eines vorzugsweise als Zweitakt-Großdieselmotor ausgebildeten Hauptmotors oder eines vorzugsweise als Elektromotor ausgebildeten Hilfsmotors antreibbaren Antriebswelle einer Schiffsschraube, wobei die Wellenabschnitte einen inneren und einen hierzu koplanaren äußeren Kupplungsring tragen und die Kupplungsringe im Bereich der einander zugewandten Umfangsflächen mit Kerben versehen sind, die in einer Deckstellung einander zu vorzugsweise konischen Bohrungen ergänzen, in welche die Kupplungsringe drehschlüssig miteinander verbindende, hydraulisch verschiebbare, vorzugsweise konische Kupplungs-Bolzen einrückbar sind, die mittels eines gemeinsamen, ringförmigen Servokolbens betätigbar sind.

Eine Kupplung dieser Art ist in der DE-Patentanmeldung 197 56 420 enthalten. Bei dieser Anordnung werden die Kupplungs-Bolzen nicht nur hydraulisch ein- und ausgerückt, sondern auch durch Drucköl in der eingerückten Stellung gehalten. Wahrend der ganzen Einrückzeit muss dementsprechend Drucköl bereitgestellt werden. Infolge der gleichzeitig stattfindenden Drehbewegung der Welle lassen sich dabei Leckverluste nicht vermeiden. Es ist daher ein vergleichsweise großer Aufwand nötig, um einen ausreichenden Druck aufrecht zu erhalten und die Leckverluste auszugleichen. Hinzu kommt, dass das Lecköl zu Verschmutzungen der Umgebung führen kann.

Hiervon ausgehend ist es daher die Aufgabe der vorliegenden Erfindung, eine Kupplung eingangs erwähnter Art mit einfachen und kostengünstigen Mitteln so zu verbessern, dass die Kupplungs-Bolzen in der eingerückten Stellung mechanisch verriegelbar sind.

Diese Aufgabe wird erfindungsgemäß dadurch gelöst, dass auf der den Bolzen gegenüberliegenden Seite der Kupplungsringe ein den Spalt zwischen den beiden Kupplungsringen überbrückender Stützring angeordnet ist, von dem versetzt zu den Kupplungs-Bolzen angeordnete Zuganker abstehen, die durch einen zweiten ringförmigen Servokolben langbar sind und mit einem den Kupplungs-Bolzen zugeordneten Sperrring zusammenwirken, der bei gelangten Zugankern von einer die Kupplungs-Bolzen in der eingerückten Stellung haltenden Position in eine die Kupplungs-Bolzen freigebende Position bringbar ist und dass die beiden Servokolben, die hydraulisch voneinander ab- und aneinander anstellbar sind, in einem Ringraum eines mit einem Wellenabschnitt verbundenen, vom Sperrring hintergriffenen Gehäuses angeordnet sind.

Mit diesen Maßnahmen werden die eingangs geschiiderten Nachteile auf einfache und kostengünstige Weise beseitigt. Mit Hilfe des Sperrrings können die Kupplungs-Bolzen in der eingerückten Position verriegelt werden, was eine hohe Zuverlässigkeit gewahrleistet. Nach der Verriegelung kann die Druckölbeaufschlagung entfallen. Es ist nur noch eine Schmierölbeaufschlagung nötig. Leckverluste sind daher nicht zu befürchten. Dies gewahrleistet auf einfache Weise einen langen, störungsfreien Betrieb. Zum Verdrehen des Sperrrings werden einfach die ihn tragenden Zuganker durch den zugeordneten Servokolben gespannt und damit gelängt. Die Zuganker fungieren dementsprechend als Federn, die den Sperrring und den diesem gegenüberliegenden Stützring mit der von diesen Federn ausgeübten Kraft zusammenhalten. Der mit dieser Kraft an den beiden Kupplungsringen anliegende Stützung stellt zudem sicher, dass die beiden Kupplungsflansche exakt fluchten, so dass die Kupplungs-Bolzen auf ihrer ganzen Länge zum Tragen kommen können. Außerdem ist für den Fall einer konischen Ausgestaltung der Kupplunas-Bolzen sichergestellt, dass sich in der erwünschten Deckstellung auch exakte, den konischen Kupplungs-Bolzen zugeordnete konische Bohrungen ergeben, in welche die konischen Kupplungs-Bolzen zuverlässig eingerückt werden können. Die erfindungsgemäßen Maßnahmen gewährleisten dementsprechend auch eine hohe Bedienungsfreundlichkeit und Betriebssicherheit.

Vorteilhafte Ausgestaltungen und zweckmäßige Fortbildungen der übergeordneten Maßnahmen sind in den Unteransprüchen angegeben. So konnen die Kupplungs-Bolzen in vorteilhafter Weise jeweils einen am zugeordneten Servokolben befestigten, den zweiten Servokolben mit Verschiebefreiheitsgrad durchgreifenden, aus dem Gehäuse nach hinten herausgeführten Schaft aufweisen, der mit dem Sperrring zusammenwirkt, der mit den Schäften der Kupplungs-Bolzen zugeordneten Bohrungen und mit den den ersten Servokolben mit Verschiebefreiheitsgrad durchgreifenden, aus dem Gehäuse herausgeführten Zugankern zugeordneten, von diesen durchgriffenen Bogenschlitzen versehen ist. Diese Maßnahmen stellen sicher, dass der außenliegende Sperrring nur verdreht werden kann, wenn die Zuganker gespannt und gleichzeitig die Schäfte der Kupplungs-Bolzen aus ihm ausgefahren sind, das heißt die Kupplungs-Bolzen sich in der Einrückstellung befinden, was eine besonders hohe Sicherheit und sinnfällige Bedienbarkeit gewährleistet.

Eine weitere vorteilhafte Maßnahme kann darin bestehen, dass die den ersten Servokolben mit Verschiebefreiheitsgrad durchgreifenden Zuganker jeweils einen rückwärtigen Gewindeabschnitt aufweisen, auf dem zumindest eine am Sperrring zur Anlage bringbare Haltemutter aufnehmbar ist. Hiermit lassen sich auf einfache Weise der Abstand des Sperrrings vom zweiten Servokolben und damit die wirksame Spannung und das erreichbare Bewegungsspiel einstellen.

Zweckmäßig kann der zum Spannen der Zuganker dienende, zweite Servokolben mit einer durch einen Deckel verschließbaren Nut versehen sein, in der auf einen zugeordneten Gewindeabschnitt der Zuganker jeweils aufschraubbare Mitnehmermuttern aufgenommen sind. Dies ermöglicht auf einfache Weise eine Einstellung der gewünschten Strecklange der Zuganker und damit der erzielbaren Haltekräfte.

In weiterer Fortbildung der übergeordneten Maßnahmen kann der zum Spannen der Zuganker dienende zweite Servokolben entgegen einer Rückstellfederanordnung von einem zwischen den beiden Servokolben vorgesehenen Anschlag abhebbar sein. Die Rückstellfederanordnung ergibt auch im drucklosen Zustand eine gewisse Lüftung des Stützrings von den Kupplungsringen, was sich günstig auf die Vermeidung von Verschleiß auswirken kann.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnung zeigen:
- Figur 1: eine Ansicht einer Schiffsantriebsvorrichtung in schematischer Darstellung,
- Figur 2: einen Schnitt durch ein erstes Beispiel der erfindungsgemäßen Kupplung mit eingerückten Kupplungsbolzen,
- Figur 3: die Anordnung gemäß Figur 2 mit ausgerückten Kupplungsbolzen,
- Figur 4: eine Teilansicht der Kupplungsringe,
- Figur 5: eine Ansicht des Sperrrings und
- Figur 6: ein weiteres Beispiel der erfindungsgemäßen Kupplung in Figur 2 entsprechender Darstellung.

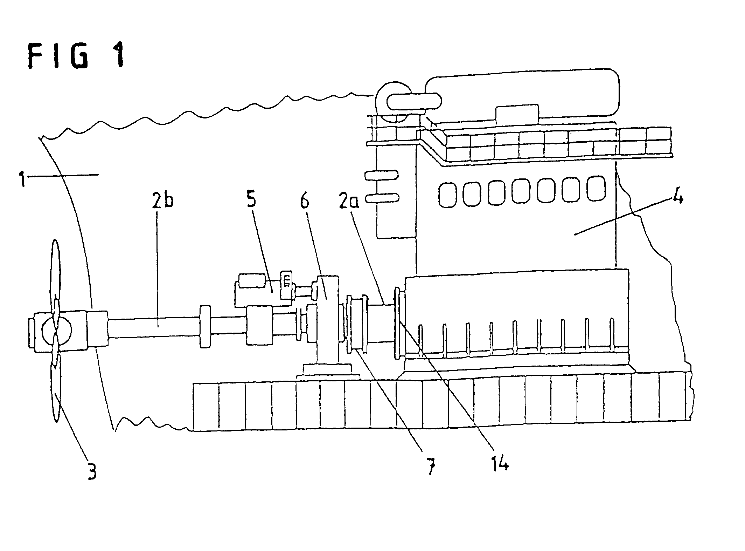

Die der Figur 1 zugrundeliegende Antriebsvorrichtung dient zum Antrieb eines lediglich schematisch angedeuteten Schiffs 1 und enthält dementsprechend eine am Ende einer aus zwei Wellenabschnitten 2a,b bestehenden Welle angeordnete Schraube 3, die mit einstellbaren Flügeln versehen sein kann. Die Schraube 3 ist über die Welle alternativ mittels eines Hauptmotors 4 oder eines Hilfsmotors 5 antreibbar. Der Hilfsmotor 5 kommt zum Einsatz, wenn der Hauptmotor 4 z. B. wegen Reparaturarbeiten nicht betriebsbereit ist. Mit Hilfe des Hilfsmotors 5 kann das Schiff bei ausgefallenem Hauptmotor 4 aus eigener Kraft manövriert und/oder fortbewegt, beispielsweise bei Gefahr aus einem Hafen herausgefahren werden

Als Hauptmotor 4 ist ein Zweitakt-Großdieselmotor vorgesehen, dessen Drehmomentausgang an den Wellenabschnitt 2a angeflanscht ist. Als Hilfsmotor 5 ist ein Elektromotor vorgesehen, der über ein Tunnelgetriebe 6 mit dem Wellenabschnitt 2b zusammenwirkt. Als Elektromotor kann dabei ein Aggregat Verwendung finden, das bei Normalbetrieb, das heißt bei aktivem Hauptmotor 4, als angetriebener Generator arbeitet und nur im Notfall als durch nicht näher dargestellte Hilfsmaschinen oder eine Batterie mit Strom versorgbarer Motor betrieben werden kann. Bei aktiviertem Hilfsmotor 5 ist der Hauptmotor 4 abgekuppelt. Hierzu ist zwischen den Wellenabschnitten 2a,b eine Kupplung 7 vorgesehen, die nachstehend näher beschrieben wird.

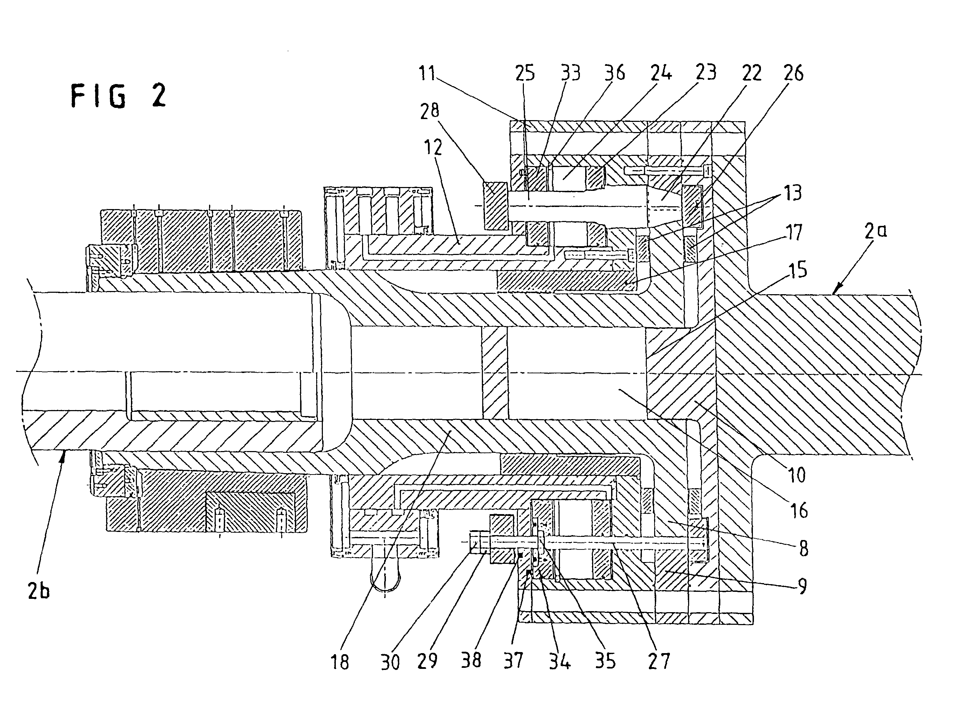

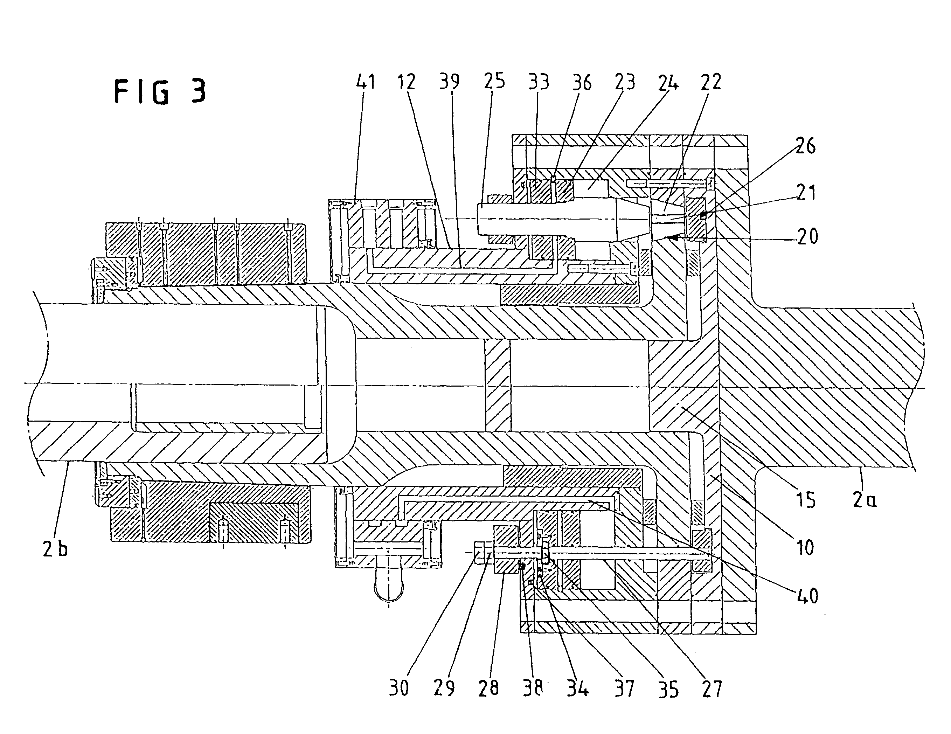

Die Kupplung 7 enthält, wie den Figuren 2 und 3 entnehmbar ist, einen inneren Kupplungsring 8 und einen hierzu koplanaren, äußeren Kupplungsring 9. Der innere Kupplungsring 8 ist als Flansch des schraubenseitigen Wellenabschnitts 2b ausgebildet. Der vergleichsweise kleine Durchmesser des Kupplungsrings 8 ermöglicht eine kompakte Bauweise des Tunnels und damit des ganzen Tunnelgetriebes 6. Im dargestellten Beispiel ist der Wellenabschnitt 2b mit einem als Hohlwelle ausgebildeten, den inneren Kupplungsring 8 tragenden Ansatz 18 versehen, der auf den Wellenabschnitt 2b aufgekeilt ist. Diese zweiteilige Ausführung erleichtert die Herstellung. Der äußere Kupplungsring 9 ist hier unter Zwischenschaltung einer Tragscheibe 10 an einen Flansch des hauptmotorseitigen Wellenabschnitts 2a angesetzt. An den äußeren Kupplungsring 9 schließt ein den inneren Kupplungsring 8 hintergreifendes, den Wellenabschnitt 2b umfassendes Trommelgehause 11 an. Die radial innere Wand des Trommelgehäuses 11 ist Teil einer auf dem Wellenabschnitt 2b angeordneten Büchse 12.

Der innere Kupplungsring 8 ist zwischen zwei an den einander gegenüberliegenden Seiten des Trommelgehäuses 11 und der Tragscheibe 10 angebrachten Axiallagern 13 aufgenommen, welche die innerhalb des Wellenzugs auftretenden Axialkräfte in jedem Falle durch die Kupplung 7 durchleiten und auf das in Figur 1 bei 14 angedeutete Axiallager der Kurbelwelle des den Hauptmotor 4 bildenden Zweitakt-Großdieselmotors übertragen. Zur gegenseitigen radialen Lagerung der Wellenabschnitte 2a,b ist die zum Wellenabschnitt 2a gehorende Tragscheibe 10 mit einem Lagerzapfen 15 versehen, der in einer zugeordneten Bohrung 16 des Wellenabschnitts 2b gelagert ist Außerdem ist in die Bohrung des Trommelgehauses 11 eine am Außenumfang des Wellenabschnitts 2b gelagerte Lagerbüchse 17 eingesetzt.

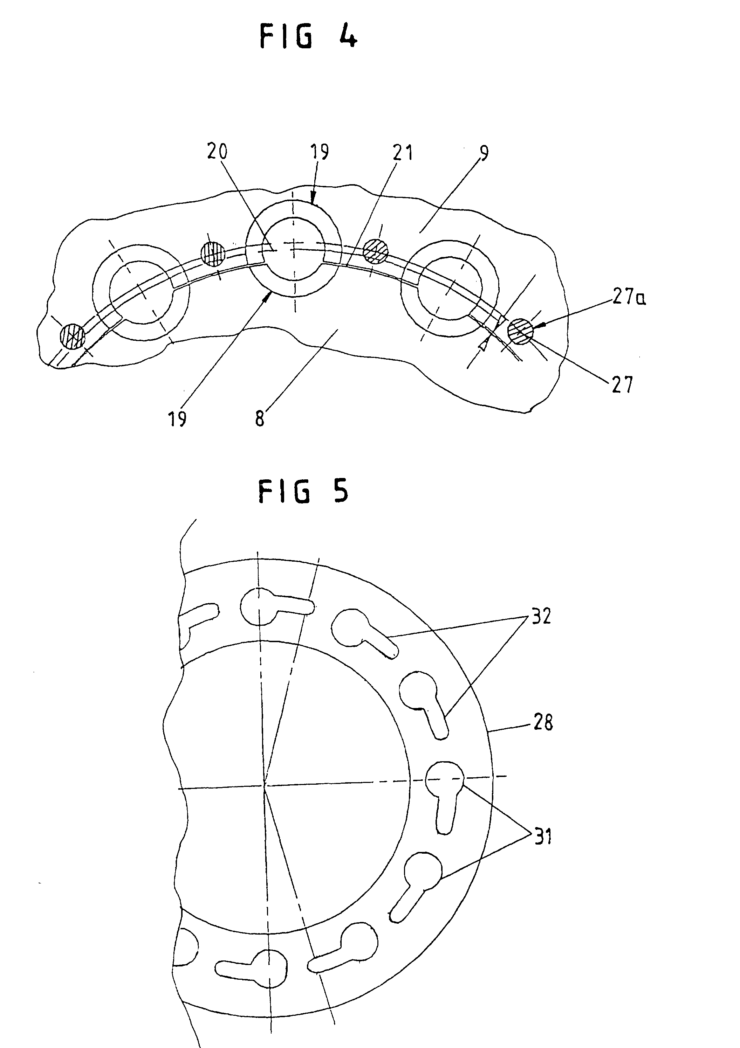

Die Kupplungsringe 8,9 sind, wie Figur 4 zeigt, im Bereich der einander zugewandten Umfangsflachen mit von einem schmalen, umlaufenden Spalt 21 ausgehenden, axialen Kerben 19 versehen. Die Kerben 19 der beiden Kupplungsringe 8,9 sind mit gleichem gegenseitigem Winkelversatz angeordnet und so ausgebildet, dass sie sich in einer gegenseitigen Deckstellung zu axialen Bohrungen 20 ergänzen. Durch Verdrehen der beiden Kupplungsringe 8,9 können die Kerben 19 in die genannte Deckstellung gebracht werden, in der sich die axialen Bohrungen 20 ergeben. Diese Position liegt der Figur 4 zugrunde. Hieraus ist auch erkennbar, dass der Spalt 21 einen etwas kleineren, mittleren Durchmesser aufweist, als der den durch die Kerben 19 gebildeten Bohrungen 20 zugeordnete Teilkreis, so dass die Kerben 19 des äußeren Kupplungsrings 9 größer als die Kerben 19 des inneren Kupplungsrings 8 sind.

Die beiden Kupplungsringe 8,9 können durch in die von den Kerben 19 in der oben erwähnten Deckstellung gebildeten Bohrungen 20 einrückbare, koaxial hierzu angeordnete Kupplungsbolzen 22 gegeneinander blockiert und damit drehschlüssig miteinander verbunden werden. Die Kupplungsbolzen 22 werden bei der Übertragung eines Drehmoments nur auf Scherung beansprucht und konnen daher gehärtet sein. Die Bolzen 22 sind als nach vorne verjüngte Konusbolzen ausgebildet. Dementsprechend sind auch die Kerben 19 konisch verjüngt, so dass die Bohrungen 20 als Konusbohrungen ausgebildet sind. In Figur 2 sind die Kupplungsbolzen 22 in der eingerückten Position, in Figur 3 in der ausgerückten Position dargestellt.

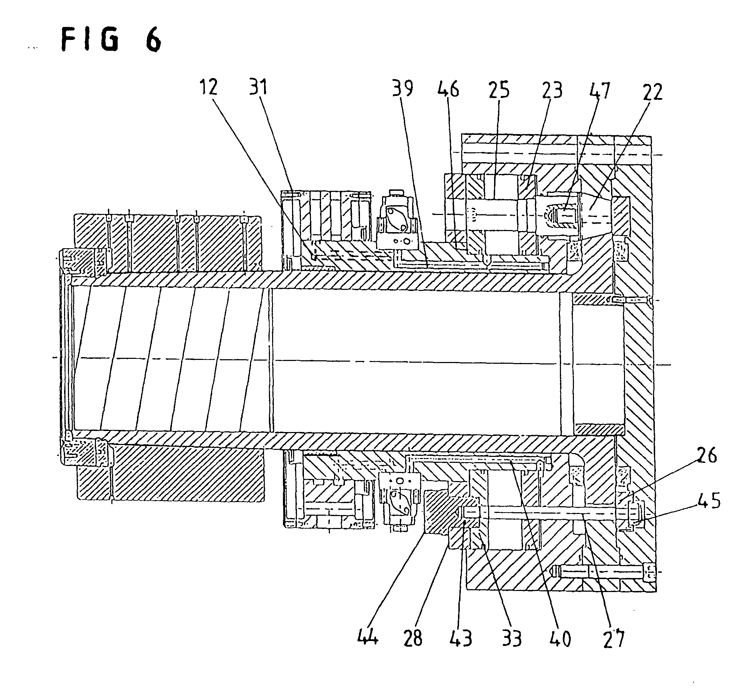

Die Kupplungsbolzen 22 sind im Trommelgehäuse 11 aufgenommen, dessen einander gegenüberliegende Seitenwände mit den Kupplungsbolzen 22 zugeordneten Bohrungen versehen sind, über welche die einander gegenüberliegenden Bolzenenden aus dem Trommelgehause 11 ausfahrbar sind. Sämtliche Kupplungsbolzen 22 sind an einem gemeinsamen, ringformen Servokolben 23 befestigt, der in einem Ringraum 24 des Trommelgehäuses 11 angeordnet ist und hydraulisch bewegt werden kann. Die Kupplungsbolzen 22 sind hier mit den zugeordneten Servokolben 23 durchgreifenden, hieran befestigten Schäften 25 versehen, die die von den Kupplungsringen 8,9 abgewandte Seitenwand des Trommelgehäuses 11 durchgreifen, während die konischen Enden die den Kupplungsringen 8,9 zugewandte Seitenwand durchgreifen. Die Schäfte 25 können, wie hier, angeformt sein. Eine zweiteilige Variante ist in Figur 6 gezeigt.

Auf der von den Kupplungsbolzen 22 abgewandten Seite der Kupplungsringe 8,9 ist ein den umlaufenden Schlitz 21 überbrückender Stützring 26 vorgesehen, der in einer Ringnut der Tragscheibe 10 angeordnet sein kann. Der Stützring 26 ergibt eine versatzlose, gegenseitige Ausrichtung der Kupplungsringe 8,9. Vom Stützring 26 stehen in Umfangsrichtung versetzt zu den Kupplungsbolzen 22 angeordnete, hierzu parallele Zuganker 27 ab. Die Zuganker 27 können in den Stützring 26 eingeschrumpft oder zweckmäßig eingeschraubt sein. Die Zuganker 27 sind hier, wie am besten aus Figur 4 erkennbar ist, so angeordnet, dass sie den äußeren Kupplungsring 9 und das mit diesem verbundene Trommelgehause 11 durchsetzen, der mit entsprechenden, gegenüber den Kerben 19 versetzten Bohrungen 27a versehen ist. Der den Bohrungen 27a zugeordnete Teilkreis hat einen anderen, hier größeren Durchmesser als der den durch die Kerben 19 gebildeten Bohrungen 20 gebildeten Teilkreis. Durch die Zuganker 27 wird daher eine gegenseitige Relativdrehung der Kupplungsringe 8,9 nicht behindert. Der zum Bewegen der Kupplungsbolzen 22 vorgesehene Servokolben 23 wird von den Zugankern 27 mit Verschiebefreiheitsgrad durchgriffen Die Zuganker 27 tragen auf ihrem hinteren, aus dem Trommelgehäuse 11 herausragenden Ende einen außerhalb des Trommelgehauses 11 angeordneten Sperrring 28, durch den die Kupplungsbolzen 22 in der eingerückten, der Figur 2 zugrundeliegenden Position blockierbar sind und der von der der Figur 2 zugrundeliegenden Blockierstellung in eine der Figur 3 zugrundeliegende Freigabestellung bringbar ist, in der die Kupplungsbolzen 22 aus den zugeordneten Bohrungen 20 ausrückbar sind, und umgekehrt.

Der Sperrring 28 wird vom rückwärtigen, mit einem Gewinde versehenen Abschnitt der Zuganker 27 durchgriffen. Auf dem Gewinde sind jeweils eine Haltemutter 29 und eine dieser zugeordnete Kontermutter 30 aufgenommen. Durch Einstellen der Haltemutter 29, an der der Sperrring 28 anliegt, lässt sich die wirksame Länge der Zuganker 27 und damit die hiermit erzielbare Vorspannung der Kupplungsbolzen 22 einstellen.

Der Sperrring 28 ist, wie Figur 5 anschaulich zeigt, mit den Schäften 25 der Kupplungsbolzen 22 zugeordneten Bohrungen 31 und mit den Zugankern 27 zugeordneten Bogenschlitzen 32 versehen. Der Durchmesser des den Bohrungen 31 zugeordneten Teilkreises sowie der Winkelabstand der Bohrungen 31 entsprechen dem Teilkreisdurchmesser und dem Winkelabstand der Kupplungsbolzen 22, so dass der Sperrring 28 durch Verdrehen in eine Stellung gebracht werden kann, in der sich eine Fluchtung der Bolzen- und Bohrungsachsen ergibt. Der Durchmesser der Bohrungen 31 entspricht dem Durchmesser der rückwärtigen Schäfte 25 der Kupplungsbolzen 22, so dass die Schäfte 25 in der vorstehend erwähnten Fluchtstellung in die Bohrungen 31 einfahrbar sind, wie Figur 3 erkennen lässt. In dieser Stellung des Sperrrings 28 können die Kupplungsbolzen 22 außer Eingriff mit den Kupplungsringen 8,9 gebracht werden.

Die Länge der von den Zugankern 27 durchgriffenen Bogenschlitze 32 begrenzt den möglichen Verdrehwinkel des Sperrrings 28. Zweckmäßig ist der Verdrehwinkel so bemessen, dass sich im Bereich der Bohrungen 31 ein etwa dem Bohrungsdurchmesser entsprechender Drehweg ergibt. Die lichte Weite der Bogenschlitze 32 entspricht dem Durchmesser der sie durchgreifenden Zuganker 27. Der Durchmesser des den Bogenschlitzen 32 zugeordneten Teilkreis sowie der Winkelabstand der Bogenschlitze 32 entsprechen dem Teilkreisdurchmesser sowie dem Winkelabstand der Zuganker. Im dargestellten Beispiel schließen die Bogenschlitze 32 direkt an die Bohrungen 31 an, was die Herstellung erleichtert.

In der der Figur 2 zugrunde liegenden Kupplungsstellung, in der die Bolzen 22 in die zugeordneten Bohrungen 20 eingerückt sind, liegt der Sperring 28 mit seiner dem Trommelgehäuse 11 zugewandten Seite an der rückwärtigen Stirnseite der bolzenseitigen Schäfte 25 an. Die oben erwähnten Haltemuttern 29 werden so eingestellt, dass die Zuganker 27 dabei vorgespannt sind, wodurch der Stützring 26 an die Kupplungsringe 8,9 angelegt wird und diese fluchtend zueinander ausrichtet. Gleichzeitig werden die Bolzen 22 in die zugeordneten Bohrungen 20 hineingepresst, so dass sich ein spielfreier Sitz ergibt. Zum Verstellen des Sperrrings 28 wird dieser gelüftet. Hierzu werden die Zuganker 27 so gereckt, dass sich ausreichend Bewegungsspiel zwischen dem Sperrring 28 und den Halteschrauben 29 sowie den rückseitigen Stirnseiten der Schäfte 25 der Kupplungsbolzen 20 ergibt.

Hierzu ist im Ringraum 24 des Trommelgehäuses 11 ein zweiter, hinter dem ersten Servokolben 12 angeordneter Servokolben 33 angeordnet, der von den Schäften 25 der Kupplungsbolzen 22 mit Verschiebefreiheitsgrad durchgriffen wird und an dem die ihn ebenfalls durchgreifenden Zuganker 27 abgestüzt sind. Hierzu ist der zweite Servokolben 33 im dargestellten Beispiel im Bereich seiner Rückseite mit die den Zugankern 27 zugeordneten Bohrungen erweiternden, durch einen zugeordneten Deckel 34 verschließbaren Ausnehmungen versehen, in die eine auf einen Gewindeabschnitt des jeweils zugeordneten Zugankers 27 aufschraubbare Mitnahmemutter 35 eingesetzt ist. Durch Einstellung der Mitnahmemuttern 35 kann der Abstand zwischen dem Stützring 26 und dem zweiten Servokolben 33 und damit die Länge des durch entsprechende Beaufschlagung des zweiten Servokolbens 33 dehnbaren Abschnitts der Zuganker 27 eingestellt werden.

Zwischen den beiden Servokolben 23 und 33 ist hier ein durch einen Sprengring gebildeter, fester Anschlag 36 vorgesehen, an dem die beiden Servokolben 23,33 in der der Figur 3 zugrundeliegenden Kupplungsstellung, in der die Kupplungsbolzen 22 ausgerückt sind, anliegen.

Zum Einrücken der Kupplungsbolzen 22 wird der Raum zwischen den beiden Servokolben 23,33 mit Drucköl beaufschlagt. Hierdurch werden die beiden Servokolben 23,33 gegenläufig voneinander und vom Anschlag 36 wegbewegt, wobei der Stützring 26 an die Kupplungsringe 8,9 angelegt und die Kupplungsbolzen 22 in die zugeordneten Bohrungen 20 eingerückt werden. Der dabei zur Anwendung kommende Druck ist zunächst so bemessen, dass die Zuganker 27 noch nicht gedehnt und gelängt werden. Der Sperrring 28 ist somit noch blockiert.

Um den Sperrring 28 verdrehen und in die Sperrstellung bringen zu können, wird der Druck im Raum zwischen den beiden Servokolben 23,33 so erhöht, dass die Zuganker 27 nun unter der Wirkung der am zweiten Servokolben 33 angreifenden Kräfte gedehnt werden. Gleichzeitig können die Kupplungsbolzen 22 unter der Wirkung der am ersten Servokolben 23 angreifenden Kräfte gestaucht werden. Die dadurch bewirkten Längenänderungen sind so bemessen, dass der Sperrring 28 frei wird und verdreht werden kann. Dabei wird der Sperrring 28 in die der Figur 2 zugrundeliegende Sperrstellung gebracht, in welcher die Schäfte 25 der Kupplungsbolzen 22 außer Fluchtung mit den sperrringseitigen Bohrungen 31 sind. Sobald nun der Druck in dem von den beiden Servokolben 23,33 begrenzten Raum abgesenkt wird, fällt die Dehnung der Zuganker 27 weg, wodurch der Sperrring 28 an die rückwärtige Stirnseite der bolzenseitigen Schäfte 25 angepresst wird.

Die Zuganker 27 fungieren hier praktisch als Anpressfeder. Der dem zweiten Servolkolben 33 gegebene Bewegungsspielraum ist daher so bemessen, dass sich die mittels des zweiten Servokolbens 33 herbeiführbare Dehnung der Zuganker 27 im elastischen Bereich befindet und dementsprechend bei Wegnahme des Drucks vollständig rückgängig gemacht wird. Der dem ersten Servokolben 23 gegebene Bewegungsspielraum entspricht dem Einrückweg der Kupplungsbolzen 22 zuzüglich einer eventuellen elastischen Stauchung dieser Kupplungsbolzen 22.

Die Drehung des Sperrrings 28 kann auf manuelle Weise bewerkstelligt werden Selbstverständlich wäre es auch denkbar, dem Sperrring 28 eine maschinelle Drehvorrichtung zuzuordnen, die ihrerseits von der Schiffsbrücke aus fernbedienbar sein kann In jedem Falle ergibt sich mittels des Sperrrings 28 eine mechanische Sicherung der Kupplungsbolzen 22 in der der Figur 2 zugrundeliegenden Einrückstellung, so dass kein hydraulischer Druck aufrecht erhalten werden muss. Es ist lediglich erforderlich, die Kupplung mit Schmieröl zu versorgen.

Zum Ausrücken der Kupplungsbolzen 22 wird zunächst der Zwischenraum zwischen den beiden Servokolben 23,33 wieder mit so hohem Druck beaufschlagt, dass der Sperrring 28 frei wird. Dieser wird anschließend in die der Figur 3 zugrundeliegende Position gebracht, in der die Achsen seiner Bohrungen 31 mit den Achsen der Kupplungsbolzen 22 fluchten. Die von den Zugankern 27 durchgriffenen Bogenschlitze 32 können dabei als Drehanschlag dienen. Anschließend werden der von den beiden Servokolben 23,33 begrenzte Raum entlastet und zumindest der erste Servokolben 23 auf der vom zweiten Servokolben 33 abgewandten Seite mit Druck beaufschlagt, wodurch die Kupplungsbolzen 22 in die der Figur 3 zugrundeliegende Stellung gebracht werden, in welcher ihre Schäfte 25 in die Bohrungen 31 des Sperrrings 28 eingreifen. Bei der den Figuren 2 und 3 zugrundeliegenden Ausführung wäre es auch denkbar, auch den zweiten Servokolben 33 auf der vom ersten Servolkolben 23 abgewandten Seite mit Druck zu beaufschlagen und so zuverlässig an den Anschlag 36 anzustellen. Im dargestellten Beispiel wird dies durch eine Rückstellfederanordnung 37 bewerkstelligt. Auf diese Weise ist sichergestellt, dass der Stützring 26 gelüftet, das heißt von den Kupplungsringen 8,9 abgehoben wird, um Verschleiß zu vermeiden. Dem Sperrring 28 kann ebenfalls eine Lüftungsfedereinrichtung 38 zugeordnet sein, durch welche der Sperrring 28 bei gedehnten Zugankern 27 von der benachbarten Wand des Trommelgehauses 11 abgehoben wird.

Der grundsätzliche Aufbau und die grundsätzliche Funktionsweise der Anordnung gemäß Figur 6 entsprechen denen des vorstehend beschriebenen Beispiels. Nachstehend werden daher in erster Linie die Unterschiede beschrieben, wobei für gleiche Teile die gleichen Bezugsziffern verwendet werden.

Bei der Anordnung gemäß Figur 6 sind die Zuganker 27 mit einer rückwärtigen Verlangerung versehen, die einen auf einen zugankerseitigen Gewindezapfen aufgeschraubten, am zweiten Servokolben 33 anliegenden, den zugeordneten Bogenschlitz des Sperrrings 28 mit Verschiebefreiheitsgrad durchgreifenden Zapfen 43 aufweist, der mit einem den Sperrring 28 hintergreifenden, hieran anliegenden Schraubenkopf 44 versehen ist. Das gegenüberliegende Ende der Zuganker 27 ist mit einem Gewindezapfen versehen, der den Stützring 26 durchgreift und eine hieran abgestützte Mutter 45 trägt, mittels der die wirksame Länge der Zuganker 27 zwischen Stützring 26 und zweitem Servokolben 33 einstellbar ist. Der Abstand der dem Sperrring 28 zugeordneten Stützfläche, hier des Schraubenkopfes 44, vom zweiten Servokolben 33 ist dagegen im Gegensatz zum ersten Beispiel gemäß Figur 2 und 3 nicht einstellbar. Es ergibt sich aber eine wesentliche vereinfachte Bauweise. Das Gehäuse 11 kann hier rückseitig offen sein. Es wird lediglich ein dem zweiten Servokolben 33 zugeordneter, z B. durch eine Stufe gebildeter Anschlag 46 benötigt. Der Sperrring 28 kann dabei direkt an den zweiten Servokolben herangeholt werden.

Eine weitere aus Figur 6 entnehmbare Variante ist die bei 47 angedeutete Verschraubung der Kupplungsbolzen 22 mit dem jeweils zugeordneten Schaft 25. Diese zweiteilige Ausführung ermoglicht eine Anpassung der Länge der Schäfte 25 an die Verhältnisse des Einzelfalls, indem zwischen den konischen Kupplungsbolzen 22 und dem jeweils zugeordneten Schaft 25 eine oder mehrere Beilagscheiben angeordnet werden.

Die oben erwähnten Druckbeaufschlagungen erfolgen über als in die zum Teil die innere Begrenzung des Trommelgehäuses 11 bildende Büchse 12 integrierte Kanäle ausgebildete Druckleitungen 39,40, die von einem Verteilerring 41 abgehen, in den die Büchse 12 eingreift. Zur Bereitstellung des zur Betätigung der Servokolben 23,33 erforderlichen hydraulischen Drucks ist eine geeignete, zugeordnete Druckquelle vorgesehen. Die Anordnung ist aber so getroffen, dass der Druck im Falle eines Ausfalls der zugeordneten Druckquelle notfalls auch von anderen maschinenseitigen Druckquellen, z.B. der dem Propeller 3 zugeordneten Druckquelle abgenommen, oder höchst hilfsweise mittels nicht näher dargestellter Handpumpen bereitgestellt werden kann. Hierdurch ist sichergestellt, dass die Kupplungsbolzen 22 auf jeden Fall betätigt werden können, was eine hohe Sicherheit gewährleistet.

## Patentansprüche

1. Kupplung zum Kuppeln von zwei Wellenabschnitten (2a,2b) einer Antriebswelle, insbesondere der alternativ mittels eines vorzugsweise als Zweitakt-Großdieselmotor ausgebildeten Hauptmotors (4) oder eines vorzugsweise als Elektromotor ausgebildeten Hilfsmotors (5) antreibbaren Antriebswelle einer Schiffsschraube (3), wobei die Wellenabschnitte (2a,b) einen inneren Kupplungsring (8) und einen hierzu koplanaren, äußeren Kupplungsring (9) tragen und die Kupplungsringe (8,9) im Bereich der einander zugewandten Umfangsflächen mit Kerben (19) versehen sind, die in einer Deckstellung einander zu vorzugsweise konischen Bohrungen (20) ergänzen, in die die Kupplungsringe (8,9) drehschlüssig miteinander verbindende, hydraulisch verschiebbare, vorzugsweise konische Kupplungsbolzen (22) einrückbar sind, die mittels eines gemeinsamen, ringförmigen Servokolbens (23) betätigbar sind, **dadurch gekennzeichnet, dass** auf der den Kupplungsbolzen (22) gegenüberliegenden Seite der Kupplungsringe (8,9) ein den Spalt zwischen den beiden Kupplungsringen (8,9) überbrückender Stützring (26) angeordnet ist, von dem versetzt zu den Kupplungsbolzen (22) angeordnete Zuganker (27) abstehen, die durch einen zweiten, ringförmigen Servokolben (33) längbar sind und mit einem den Kupplungsbolzen (22) zugeordneten Sperrring (28) zusammenwirken, der bei gelangten Zugankern (27) von einer die Kupplungsbolzen (22) in der eingerückten Stellung haltenden Position in eine die Kupplungsbolzen (22) freigebende Position bringbar ist und dass die beiden Servokolben (23,33), die hydraulisch voneinander ab- und aneinander anstellbar sind, in einem Ringraum 24 eines mit einem Wellenabschnitt (2a) verbundenen, vom Sperrring (28) hintergriffenen Gehäuses (11) angeordnet sind.

2. Kupplung nach Anspruch 1, **dadurch gekennzeichnet, dass** die Kupplungsbolzen (22) jeweils einen am zugeordneten Servokolben (23) befestigten, den zweiten Servokolben (33) mit Verschiebefreiheitsgrad durchgreifenden, aus dem Gehäuse (11) nach hinten herausgeführten Schaft (25) aufweisen, der mit dem Sperrring (28) zusammenwirkt, der mit den Schäften (25) der Kupplungsbolzen (22) zugeordneten Bohrungen (31) und mit den den ersten Servokolben (23) mit Verschiebefreiheitsgrad durchgreifenden, aus dem Gehäuse (11) herausgeführten Zugankern (27) bzw Zuganker-Verlängerungen (43) zugeordneten Bogenschlitzen (32) versehen ist.

3. Kupplung nach einem der vorhergehenden Ansprüche, **dadurch gekennzeichnet, dass** die den ersten Servokolben (23) mit Verschiebefreiheitsgrad durchgreifenden Zuganker (27) jeweils einen rückwärtigen Gewindeabschnitt aufweisen, auf dem zumindest eine am Sperrring (28) zur Anlage bringbarer, einstellbarer Anschlag (29) aufnehmbar ist.

4. Kupplung nach einem der vorhergehenden Ansprüche, **dadurch gekennzeichnet, dass** der zum Spannen der Zuganker (27) dienende, zweite Servokolben (33) mit auf einen zugeordneten Gewindeabschnitt der Zuganker (27) jeweils aufnehmbaren, einsteilbaren Anschlägen (35) zusammenwirkt, die vorzugsweise in einer zugeordneten, mittels eines Deckels (34) verschließbaren Ausnehmung des zweiten Servokolbens (33) angeordnet sind.

5. Kupplung nach einem der vorhergehenden Anspruche 1 oder 2, **dadurch gekennzeichnet, dass** die den ersten Servokolben (23) mit Verschiebefreiheitsgrad durchgreifenden Zuganker (27) mit einer rückwärtigen Verlängerung versehen sind, die einen am Sperrring (28) anliegenden Kopf (44) und einen hiervon abstehenden Zapfen (43) aufweist, der den Sperrring (28) durchgreift und am zweiten Servokolben (33) anliegt.

6. Kupplung nach einem der vorhergehenden Ansprüche, **dadurch gekennzeichnet, dass** zwischen den beiden Servokolben (23,33) ein fester Anschlag (36) vorgesehen ist, an den die beiden Servokolben (23,33) beim Ausrücken der Kupplungsbolzen (22) gegenläufig anstellbar sind.

7. Kupplung nach einem der vorhergehenden Ansprüche, **dadurch gekennzeichnet, dass** der zum Spannen der Zuganker (27) dienende, zweite Servokolben (33) entgegen einer Rückstellfederanordnung (37) vom Anschlag (36) abhebbar ist.

8. Kupplung nach einem der vorhergehenden Ansprüche, **dadurch gekennzeichnet, dass** dem Sperrring (28) eine Lüftungsfederanordnung (38) zugeordnet ist.

9. Kupplung nach einem der vorhergehenden Ansprüche, **dadurch gekennzeichnet, dass** die Zuganker (27) mit dem Stützring (26) verschraubt sind.

10. Kupplung nach einem der vorhergehenden Ansprüche, **dadurch gekennzeichnet, dass** die radial innere Wand des die Servokolben (23,33) aufnehmenden Gehauses Teil einer den dem inneren Kupplungsring (8) zugeordneten Wellenabschnitt (2b) umfassenden Büchse (12) ist, die in einen mit Druckmittelanschlüssen versehenen Verteilerring (41) eingreift und mit Druckmittelleitungen (39,40) zur Druckbeaufschlagung der Servokolben (23,33) versehen ist.

11. Kupplung nach einem der vorhergehenden Ansprüche, **dadurch gekennzeichnet, dass** der innere Kupplungsring (8) zwischen zwei einander gegenüberliegenden, am Gehäuse (11) und einem dieses und den äußeren Kupplungsring (9) tragenden Teils (10) des dem äußeren Kupplungsring (9) zugeordneten Wellenabschnitts (2a) befestigten Axiallagern (13) angeordnet ist.

12. Kupplung nach einem der vorhergehenden Ansprüche, **dadurch gekennzeichnet, dass** der dem inneren Kupplungsring (8) zugeordnete Wellenabschnitt (2b) zumindest teilweise als Hohlwelle ausgebildet ist, in der ein vom anderen Wellenabschnitt (2a) abstehender Lagerzapfen (15) gelagert ist und auf der das Gehäuse (11) vorzugsweise mittels einer eingesetzten Lagerbüchse (17) gelagert ist.

## Claims

1. Clutch for coupling two shaft sections (2a, 2b) of a drive shaft, in particular of the drive shaft of a marine screw propeller (3) which is alternatively drivable by a main engine (4), preferably embodied as a two-stroke large diesel engine, or an auxiliary engine (5), preferably embodied as an electric motor, wherein the shaft sections (2a, b) support an inner clutch ring (8) and an outer clutch ring (9) coplanar thereto and wherein the clutch rings (8, 9) are provided with notches (19) in the area of the facing circumferential surfaces, which in a congruent position complement one another to preferably conical bores (20), into which hydraulically movable and preferably conical clutch bolts (22) can be inserted which fixedly connect the clutch rings (8, 9) to one another for common rotation and can be actuated by a common annular servopiston (23), **characterized in that** on the side of the clutch rings (8, 9) opposite the clutch bolts (22) a support ring (26), bridging a gap between the two clutch rings (8, 9), is arranged from which tie rods (27), offset relative to the clutch bolts (22), project that can be extended by a second annular servopiston (33) and cooperate with a locking ring (28) correlated with the clutch bolts (22), wherein the locking ring, when the tie rods (27) are extended, can be moved from a position in which the clutch bolts (22) are secured in their insertion position into a position for releasing the clutch bolts (22), and **in that** the two servopistons (23, 33), which are hydraulically movable away from one another and toward one another, are arranged in an annular chamber (24) of a housing (11) connected to the shaft section (2a) and engaged from behind by the locking ring (28).

2. Clutch according to claim 1, **characterized in that** the clutch bolts (22) each have a shaft (25) that is fastened to the correlated servopiston (23), penetrates the second servopiston (33) with a degree of freedom of movement, extends rearwardly from the housing (11), and cooperates with the locking ring (28) provided with bores (31) correlated with the shafts (25) of the clutch bolts (22) and with arcuate slots (32) correlated with the tie rods (27) or the tie rod projections (43) penetrating the first servopiston (23) with a degree of freedom of movement.

3. Clutch according to one of the proceeding claims, **characterized in that** the tie rods (27), penetrating the first servopiston (23) with a degree of freedom of movement, each have a reward threaded portion on which at least an adjustable stop (29) that can be brought into contact at the locking ring (28) is received.

4. Coupling according to one of the preceding claims **characterized in that** the second servopiston (33) serving to tension the tie rod (27) cooperates with adjustable stops (35) receivable respectively on a correlated threaded portion of the tie rods (27) and preferably arranged in a correlated recess, closeable by a cover (34), of the second servopiston (33).

5. Clutch according to one of the preceding claims 1 or 2, **characterized in that** the tie rods (27), penetrating the first servopiston (23) with a degree of freedom of movement, are provided with a rearward projection which has a head (44) resting at the locking ring (28) and a pin (43) projecting therefrom which penetrates the locking ring (28) and rests against the second servopiston (33).

6. Clutch according to one of the preceding claims, **characterized in that** a fixed stop (36) is provided between the servopistons (23, 33) against which the two servopistons (23, 33) can be moved in opposite directions during retraction of the clutch bolts (22).

7. Clutch according to one of the preceding claims, **characterized in that** the second servopiston (33) serving to tension the tie rods (27) can be lifted off the stop (36) counter to a return spring arrangement (37).

8. Clutch according to one of the preceding claims, **characterized in that** the locking ring (28) has correlated therewith a lifting spring arrangement (38).

9. Clutch according to one of the preceding claims, **characterized in that** the tie rods (27) are screwed to the support ring (26).

10. Clutch according to one of the preceding claims, **characterized in that** the radially inner wall of the housing receiving the servopistons (23, 33) is part of a bushing (12), surrounding a shaft section (2b) that is correlated with the inner clutch ring (8), which engages a distributor ring (41) provided with hydraulic medium connectors and has pressure medium lines (39, 40) for pressure loading the servopistons (23, 33).

11. Clutch according to one of the preceding claims, **characterized in that** the inner clutch ring (8) is positioned between two axial bearings (13) positioned opposite one another and fastened to the housing (11) and to a part (10) of the shaft section (2a) correlated with the outer clutch ring (9), on which the outer clutch ring (9) as well as the housing are supported.

12. Clutch according to one of the preceding claims, **characterized in that** the shaft section (2b) correlated with the inner clutch ring (8) is at least partially embodied as a hollow shaft in which a bearing pin (15), projecting from the other shaft section (2a), is supported and on which the housing (11) is preferably supported by an inserted bearing bushing (17).

## Revendications

1. Embrayage pour accoupler deux tronçons d'arbre (2a, 2b) d'un arbre moteur, en particulier de l'arbre moteur d'une hélice de navire (3), lequel peut être entraîné alternativement au moyen d'un moteur principal (4) réalisé de préférence en tant que grand moteur Diesel à deux temps ou au moyen d'un moteur auxiliaire (5) réalisé de préférence comme moteur électrique, lesdits tronçons d'arbre (2a, b) portant une bague intérieure d'accouplement (8) et une bague extérieure d'accouplement (9) coplanaire à celle-ci, et les bagues d'accouplement (8, 9) étant pourvues - dans la zone des surfaces périphériques montrant l'une vers l'autre - d'encoches (19) qui, dans une position où elles sont disposées exactement l'une en regard de l'autre, se complètent pour former des trous de préférence coniques (20) dans lesquels peuvent être engagés des boulons d'accouplement (22) de préférence coniques hydrauliquement déplaçables qui relient les bagues d'accouplement (8, 9) entre elles à engagement positif à rotation, lesdits boulons pouvant être actionnés au moyen d'un servo-piston (23) annulaire commun, **caractérisé par le fait que**, du côté des bagues d'accouplement (8, 9) qui est situé en vis-à-vis des boulons d'accouplement (22), est disposée une bague d'appui (26) qui sert à ponter la fente située entre les deux bagues d'accouplement (8, 9) et de laquelle font saillie des tirants (27) qui sont décalés par rapport aux boulons d'accouplement (22), peuvent être allongés par l'intermédiaire d'un deuxième servo-piston annulaire (33) et agissent de concert avec une bague d'arrêt (28) qui est associée aux boulons d'accouplement (22) et qui, lorsque les tirants (27) sont allongés, peut être placée d'une position où les boulons d'accouplement (22) sont maintenus dans la position embrayée dans une position dans laquelle les boulons d'accouplement (22) sont libérés, et que les deux servo-pistons (23, 33) qui peuvent être mis en appui l'un sur l'autre et être écartés l'un de l'autre de manière hydraulique sont disposés dans un espace annulaire (24) d'un carter (11) qui est relié à un tronçon d'arbre (2a) et derrière lequel est disposée ladite bague d'arrêt (28).

2. Embrayage selon la revendication 1, **caractérisé par le fait que** les boulons d'accouplement (22) présentent respectivement une tige (25) qui est fixée sur le servo-piston associé (23), se prend à travers le deuxième servo-piston (33) avec un degré de liberté de translation et fait saillie à l'arrière hors du carter (11), ladite tige agissant de concert avec la bague d'arrêt (28) qui est pourvue de trous (31) associés aux tiges (25) des boulons d'accouplement (22) ainsi que de fentes en arc (32) qui sont associées aux tirants (27) ou bien aux rallonges (43) des tirants qui se prennent à travers le premier servo-piston (23) avec un degré de liberté de translation et qui font saillie hors du carter (11).

3. Embrayage selon l'une des revendications précédentes, **caractérisé par le fait que** les tirants (27) qui se prennent à travers le premier servo-piston (23) avec un degré de liberté de translation présentent respectivement un tronçon fileté arrière qui peut recevoir au moins une butée réglable (29) laquelle peut être mise en appui sur la bague d'arrêt (28).

4. Embrayage selon l'une des revendications précédentes, **caractérisé par le fait que** le deuxième servo-piston (33) qui sert à tendre les tirants (27) coopère avec des butées (35) réglables qui peuvent être reçues respectivement sur un tronçon fileté associé des tirants (27) et qui, de préférence, sont disposées dans un creux associé du deuxième servo-piston (33), ledit creux pouvant être fermé au moyen d'un couvercle (34).

5. Embrayage selon l'une des revendications précédentes 1 ou 2, **caractérisé par le fait que** les tirants (27) qui se prennent à travers le premier servo-piston (23) avec un degré de liberté de translation sont pourvus d'une rallonge arrière qui présente une tête (44) prenant appui sur la bague d'arrêt (28) ainsi qu'un tenon (43) qui fait saillie de ladite tête, se prend à travers la bague d'arrêt (28) et s'appuie sur le deuxième servo-piston (33).

6. Embrayage selon l'une des revendications précédentes, **caractérisé par le fait qu'**une butée fixe (36) est prévue entre les deux servo-pistons (23, 33), sur laquelle les deux servo-pistons (23, 33) peuvent venir en appui en sens opposés lorsque les boulons d'accouplement (22) sont débrayés.

7. Embrayage selon l'une des revendications précédentes, **caractérisé par le fait que** le deuxième servo-piston (33) qui sert à tendre les tirants (27) peut être détaché de la butée (36) contre une disposition à ressort de rappel (37).

8. Embrayage selon l'une des revendications précédentes, **caractérisé par le fait qu'**une disposition à ressort à écarter (38) est associée à la bague d'arrêt (28).

9. Embrayage selon l'une des revendications précédentes, **caractérisé par le fait que** les tirants (27) sont vissés avec la bague d'appui (26).

10. Embrayage selon l'une des revendications précédentes, **caractérisé par le fait que** la paroi radialement intérieure du carter recevant les servo-pistons (23, 33) est une partie d'une boîte (12) entourant le tronçon d'arbre (2b) associé à la bague intérieure d'accouplement (8), ladite boîte se prenant dans une bague de distribution (41) pourvue de raccords de fluide sous pression et étant pourvue de conduites à fluide sous pression (39, 40) destinées à soumettre les servo-pistons (23, 33) à l'action d'un fluide sous pression.

11. Embrayage selon l'une des revendications précédentes, **caractérisé par le fait que** la bague intérieure d'accouplement (8) est disposée entre deux paliers de butée (13) en regard l'un de l'autre qui sont fixés sur le carter (11) et sur une partie (10) du tronçon d'arbre (2a) associé à la bague extérieure d'accouplement (9), ladite partie (10) portant le carter et la bague extérieure d'accouplement (9).

12. Embrayage selon l'une des revendications précédentes, **caractérisé par le fait que** le tronçon d'arbre (2b) qui est associé à la bague intérieure d'accouplement (8) est réalisé au moins en partie comme arbre creux dans lequel est logé un tourillon (15) faisant saillie de l'autre tronçon d'arbre (2a) et sur lequel est logé ledit carter (11) de préférence par le biais d'un coussinet (17) inséré.
